# EUROPEAN PATENT APPLICATION

(11) **EP 4 209 997 A1**
(43) Date of publication of application: **12.07.2023**
(21) Application number: 22803683.6
(22) Date of filing: 08.04.2022
(51) Int. Cl.: G06T 9/00

(54) **IMAGE PROCESSING METHOD AND APPARATUS, AND COMPUTER DEVICE AND STORAGE MEDIUM**

(30) Priority: 17.05.2021 CN 202110536966
(71) Applicant: Tencent Technology (Shenzhen) Company Limited, Shenzhen, Guangdong, 518057 (CN)
(72) Inventor: YUAN, Zhiqiang, Shenzhen, Guangdong 518057 (CN); ZHAO, Xinda, Shenzhen, Guangdong 518057 (CN); YANG, Yandong, Shenzhen, Guangdong 518057 (CN)
(74) Representative: Gunzelmann, Rainer
(86) International application number: PCT/CN2022/085728
(87) International publication number: WO 2022/242358

(57) **Abstract**

Disclosed in embodiments of the present application are an image processing method and apparatus, and a computer device and a storage medium. The method comprises: obtaining a target compression texture resource of a target image, the target compression texture resource comprising a plurality of compression texture blocks; distributing a plurality of target working groups for decoding to the plurality of compression texture blocks in a graphics card shader, and distributing each compression texture block to the corresponding target working group; and calling each target working group in the graphics card shader in parallel, and decoding the received compression texture blocks according to a compression texture format to obtain target texture data of the target image, the target texture data comprising decoded data corresponding to each compression texture block. According to the embodiments of the present application, the decoding efficiency can be effectively improved while the target compression texture resource is decoded.

## Description

This application claims priority to Chinese Patent Application No. 202110536966.7, entitled "IMAGE PROCESSING METHOD AND APPARATUS, COMPUTER DEVICE, AND STORAGE MEDIUM" and filed with the National Intellectual Property Administration, PRC on May 17, 2021, which is incorporated herein by reference in its entirety.

### FIELD OF THE TECHNOLOGY

The present disclosure relates to the field of Internet technologies, and specifically to image processing technologies.

### BACKGROUND OF THE DISCLOSURE

At present, in the process of creating an image, to reduce memory occupied by the image and network resources required to transmit the image, an image creator usually uses a texture compression format to perform compression encoding on the image to obtain a compressed texture resource to be issued. Accordingly, any device obtaining the compressed texture resource of the image usually needs to decode the resource. Based on this, how to decode a compressed texture resource has become a hot research topic.

### SUMMARY

Embodiments of the present disclosure provide an image processing method, an image processing apparatus, a computer device, and a storage medium, to decode a compressed texture resource with an improved decoding efficiency.

According to an aspect, the embodiments of the present disclosure provide an image processing method, the method being performed by a computer device, the method including:
obtaining a compressed texture resource of an image, the compressed texture resource being obtained by encoding the image by using a texture compression format, the compressed texture resource including a plurality of compressed texture blocks;
allocating, in a display card shader, a plurality of target work groups for respectively decoding the plurality of compressed texture blocks, and distributing the compressed texture blocks to the respective target work groups; and
invoking the target work groups in the display card shader in parallel, to respectively decode the received compressed texture blocks according to the texture compression format to obtain texture data of the image, the texture data including decoded data respectively corresponding to the compressed texture blocks.

According to another aspect, the embodiments of the present disclosure provide an image processing apparatus, the apparatus being deployed on a computer device, the apparatus including:
an obtaining unit, configured to obtain a compressed texture resource of an image, the compressed texture resource being obtained by encoding the image by using a texture compression format, the compressed texture resource including a plurality of compressed texture blocks; and
a processing unit, configured to: allocate, in a display card shader, a plurality of target work groups for respectively decoding the plurality of compressed texture blocks, and distribute the compressed texture blocks to the respective target work groups,
the processing unit being further configured to: invoke the target work groups in the display card shader in parallel, to respectively decode the received compressed texture blocks according to the texture compression format to obtain texture data of the image, the texture data including decoded data respectively corresponding to the compressed texture blocks.

According to still another aspect, the embodiments of the present disclosure provide a computer device, the computer device including an input interface and an output interface, the computer device further including: a display card shader and a computer storage medium.

The computer storage medium stores one or more instructions, the one or more instructions being suitable to perform the image processing method in the foregoing aspects.

According to still another aspect, the embodiments of the present disclosure provide a computer storage medium, the computer storage medium storing one or more instructions, the one or more instructions being suitable to perform the image processing method in the foregoing aspects.

According to still another aspect, the embodiments of the present disclosure provide a computer program product, the computer program product, when being executed, performing the image processing method in the foregoing aspects.

In the embodiments of the present disclosure, a display card shader is introduced, and a plurality of work groups independent of each other are deployed in advance in the display card shader. A compressed texture resource obtained by encoding an image by using a texture compression format includes a plurality of compressed texture blocks. After the compressed texture resource of the image is obtained, target work groups for decoding may be respectively allocated in the display card shader to the compressed texture blocks, and the compressed texture blocks are distributed to the respective target work groups. Next, the received compressed texture blocks may be decoded according to the texture compression format by invoking the target work groups in the display card shader in parallel. In this way, not only the decoding of the compressed texture resource can be implemented, but also parallel decoding of the compressed texture blocks can be implemented, thereby effectively improving the decoding efficiency. In addition, the entire decoding process is implemented by using the display card shader, so that the entire decoding process does not require the participation of a central processing unit (CPU). In this way, resources of the CPU can be effectively saved, thereby effectively reducing the resource usage of the CPU and improving the running efficiency of a computer device.

### BRIEF DESCRIPTION OF THE DRAWINGS

To describe the technical solutions in the embodiments of the present disclosure more clearly, the accompanying drawings required in the description of the embodiments are briefly described below. Apparently, the accompanying drawings in the following description show only some embodiments of the present disclosure, and a person of ordinary skill in the art may still derive other drawings from these accompanying drawings without creative efforts.
FIG. 1a is a schematic diagram of a decoding procedure in an image processing solution according to an embodiment of the present disclosure.
FIG. 1b is a schematic diagram of a decoding procedure of a display card shader according to an embodiment of the present disclosure.
FIG. 2 is a schematic flowchart of an image processing method according to an embodiment of the present disclosure.
FIG. 3a is a schematic structural diagram of a blockchain according to an embodiment of the present disclosure.
FIG. 3b is a schematic diagram of storing texture data in a blockchain according to an embodiment of the present disclosure.
FIG. 4 is a schematic flowchart of an image processing method according to another embodiment of the present disclosure.
FIG. 5 is a schematic diagram of space mapping according to an embodiment of the present disclosure.
FIG. 6a is a schematic structural diagram of a cloud game server according to an embodiment of the present disclosure.
FIG. 6b is a schematic flowchart of an image processing method according to another embodiment of the present disclosure.
FIG. 7 is a schematic diagram of invoking a software development kit (SDK) according to an embodiment of the present disclosure.
FIG. 8 is a schematic structural diagram of an image processing apparatus according to an embodiment of the present disclosure.
FIG. 9 is a schematic structural diagram of a computer device according to an embodiment of the present disclosure.

### DESCRIPTION OF EMBODIMENTS

The following clearly and completely describes technical solutions in embodiments of the present disclosure with reference to the accompanying drawings in the embodiments of the present disclosure.

With the continuous development of Internet technology, Artificial Intelligence (AI) technology has also been developed. The AI technology is a theory, method, technology, or application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science. This technology mainly attempts to understand the essence of intelligence and produce a new intelligent machine that can react in a manner similar to human intelligence, to provide the intelligent machine with multiple functions such as perception, reasoning, and decision making Correspondingly, the AI technology is a comprehensive discipline, which mainly includes several major directions such as a computer vision (CV) technology, a speech processing technology, a natural language processing technology, and machine learning (ML)/deep learning (DL).

The CV technology is a science that studies how to use a machine to "see", and more specifically, that uses a camera and a computer to replace human eyes to perform machine vision such as recognition, tracking, and measurement on a target, and further perform graphic processing, so that the computer processes the target into an image more suitable for human eyes to observe, or an image transmitted to an instrument for detection. As a scientific discipline, the CV studies related theories and technologies and attempts to establish an AI system that can obtain information from images or multidimensional data. The CV technologies generally include technologies such as image processing, image recognition, image semantic understanding, image retrieval, optical character recognition (OCR), video processing, video semantic understanding, video content/behavior recognition, three-dimensional (3D) object reconstruction, a 3D technology, virtual reality, augmented reality, synchronous positioning, and map construction, and further include biometric feature recognition technologies such as face recognition and fingerprint recognition.

Based on the image processing technology in the CV technology discussed above, the embodiments of the present disclosure provide an image processing solution to implement the decoding of a compressed texture resource of any image. The compressed texture resource is an encoding result obtained by encoding an image by using a texture compression format. The texture compression format may be an Adaptive Scalable Texture Compression (ASTC) format, an ETC format (a texture compression format), or the like. In ASTC and ETC, pixels are usually compressed and stored in compressed texture blocks (referred to as blocks for short). Quantities of pixels compressed in blocks may range from 4×4 to 12×12, and blocks are independent of each other. That is, the compressed texture resource obtained by encoding the image by using the texture compression format may usually include a plurality of compressed texture blocks. The meaning of "a plurality of" discussed in the embodiments of the present disclosure refers to "at least two".

In specific implementations, the image processing solution may be performed in a computer device. The computer device may be a terminal or a server. The terminal discussed herein may include, but not limited to, a smartphone, a tablet computer, a notebook computer, a desktop computer, a smart watch, and a smart television. The terminal may run various clients (applications, APPs), for example, a game client, a multimedia client, and a social networking client. The server discussed herein may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform.

In addition, the computer device may be located outside or inside a blockchain network, which is not limited herein. The blockchain network is a network formed by a point-to-point (P2P) network and a blockchain. The blockchain is an application of computer technologies involving distributed data storage, P2P transmission, a consensus mechanism, and an encryption algorithm, which is essentially a decentralized database, and is a chain of data blocks (or referred to as blocks) generated in association by using a cryptographic method. In a case that the computer device is located inside a blockchain network or has a communication connection with a blockchain network, the computer device may upload internal data to a blockchain in the blockchain network for storage to prevent the internal data of the computer device from being tampered, thereby improving the security of the internal data.

In a possible embodiment, the computer device may include at least a graphics processing unit (GPU), a display card computational shader (referred to as a display card shader hereinafter), a computational shader decoding pipeline (referred to as a decoding pipeline hereinafter), and the like. (1) A display card is a device that uses a GPU to undertake the task of outputting a display image. (2) A display card shader is a processing unit run in the display card, and may be connected to an input display card shader buffer block configured to input data and an output display card shader buffer block configured to output data. The display card shader may include M work groups having a decoding capability. The work groups may be understood as sub-processing units having a decoding capability in the display card shader. The work groups are independent of each other, and M is an integer greater than 1. (3) A decoding pipeline is a processing unit configured to indicate a decoding procedure of the display card shader. That is, the display card shader in the embodiments of the present disclosure works according to the procedure specified by the decoding pipeline. The computer device may further include rendering pipelines. The rendering pipelines may also be referred to as rendering assembly lines, and are parallel processing units that process graphic signals inside a display card independently of each other. In a case that the computer device includes a rendering pipeline, after texture data of an image is obtained by an image decoding solution, the image is rendered and displayed by the rendering pipeline using the decoded texture data.

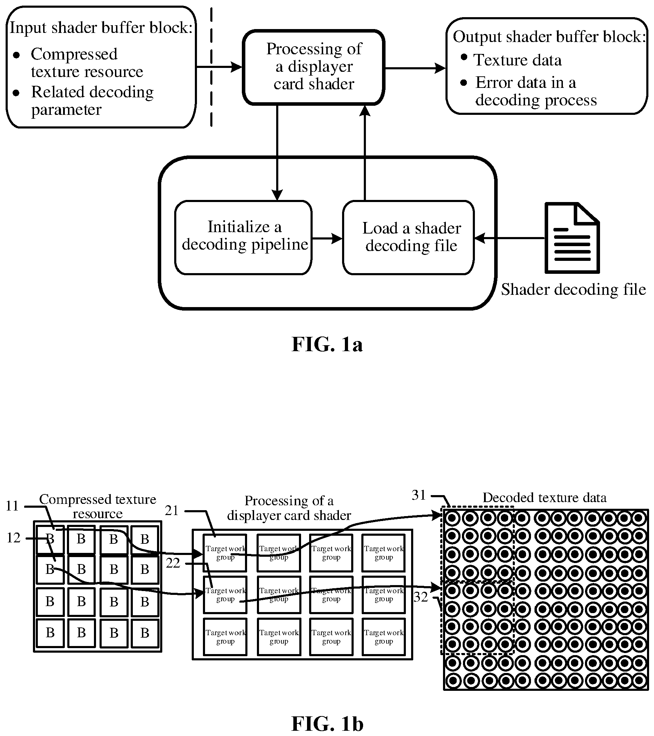

The image processing solution provided in the embodiments of the present disclosure is mainly using a display card shader in a computer device to decode a compressed texture resource of an image. Referring to FIG. 1a, a decoding procedure of the image processing solution is generally as follows. First, a decoding pipeline in the computer device may be initialized, and a shader decoding file is loaded. After the shader decoding file is successfully loaded, the shader decoding file may be transmitted to the display card shader in the computer device. After a compressed texture resource of an image and a related decoding parameter of the compressed texture resource are inputted into the display card shader in the computer device by an input shader buffer block, the display card shader may allocate target work groups (that is, a work group to which a compressed texture block is allocated) respectively for compressed texture blocks in the compressed texture resource.

Next, the compressed texture blocks may be respectively distributed to corresponding target work groups. The target work groups decode received compressed texture blocks in parallel according to the related decoding parameter and the shader decoding file to implement the decoding of a compressed texture resource of an image, to obtain texture data of the image. A block of 4×4 (a compressed texture block) is used as an example, and "B" represents each compressed texture block. Referring to FIG. 1b, a compressed texture block 11 in a compressed texture resource may be distributed to a target work group 21 in the display card shader to obtain decoded data noted by 31. A compressed texture block 12 in the compressed texture resource may be distributed to a target work group 22 in the display card shader for decoding, to obtain decoded data noted by 32. The rest is similar. After texture data of the image is obtained, the display card shader may further output the texture data of the image by using the output shader buffer block. In a possible embodiment, in a case that the display card shader fails to decode one or more compressed texture blocks, the display card shader may further output error data involved in the decoding process by the output shader buffer block, to allow a related technician to analyze the cause of a decoding failure according to the error data in time.

It has been shown in practice that the image processing solution provided in the embodiments of the present disclosure may have at least the following beneficial effects. (1) The entire decoding process is implemented by the display card shader, so that the entire decoding process does not require a CPU. In this way, resources of the CPU can be effectively saved, thereby effectively reducing the resource usage of the CPU and improving the running efficiency of a computer device. (2) The parallel decoding of compressed texture blocks is implemented by parallel invoking of the target work groups in the display card shader, thereby effectively improving the decoding efficiency.

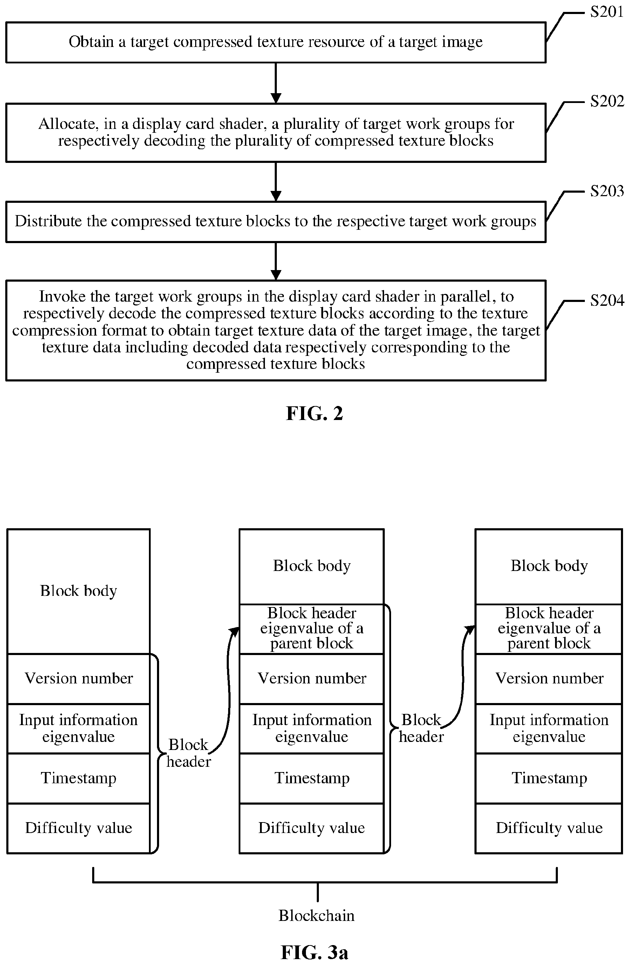

Based on the foregoing description, the embodiments of the present disclosure provide an image processing method. The image processing method may be performed in the computer device discussed above. The computer device may include a rendering pipeline, a decoding pipeline, and a display card shader, and the display card shader works according to a procedure specified by the decoding pipeline. Referring to FIG. 2, the image processing method may include the following S201 to S204.

S201: Obtain a compressed texture resource of an image.

The image may be a game image in a game, a video image in any movie or television show, a selfie image of a user, a scenery image of a scenic spot, or the like. The compressed texture resource is obtained by encoding the image by using a texture compression format. The compressed texture resource includes a plurality of compressed texture blocks. The image includes texture data in a texture format. The texture format may be, for example, an RGBA format. R in RGBA represents a red channel, G represents a green channel, B represents a blue channel, and A represents a transparent channel. A process of encoding the image by using the texture compression format may be understood as a process of converting the texture data of the image from the texture format into the texture compression format. Correspondingly, the essence of decoding the compressed texture resource may be understood as the processing of converting the compressed texture resource from the texture compression format into the texture format.

In a possible embodiment, in a case that the compressed texture resource of the image is not stored in the local space of the computer device in advance, the embodiment of S201 may be: sending a resource obtaining request to another device storing the compressed texture resource, to request the another device to return the compressed texture resource; and then the computer device may receive the compressed texture resource. In a case that the compressed texture resource of the image is stored in the local space of the computer device in advance, the computer device may load the compressed texture resource from the local space by using the internal rendering pipeline to obtain the compressed texture resource. That is, the embodiment of S201 may be: loading, by the rendering pipeline, the compressed texture resource of the image from the local space of the computer device.

S202: Allocate, from the display card shader, a plurality of target work groups for decoding a plurality of compressed texture blocks.

As can be seen from above, the display card shader may include M work groups. Each work group has a decoding capability, and each work group has a sequence number identifier. In a specific implementation, the plurality of compressed texture blocks may be traversed, and a current compressed texture block being traversed currently may be determined. It is taken into consideration that a quantity of work groups in the display card shader may be the same as or different from a quantity of compressed texture blocks. In a case that the quantity of work groups in the display card shader is less than the quantity of compressed texture blocks, no unallocated work group exists in the display card shader when allocating a target work group to the current compressed texture block. Based on this, to appropriately allocate the target work group to the current compressed texture block, it may be first detected whether an unallocated work group exists in the M work groups in the display card shader, so that different manners of allocating a target work group to the current compressed texture block are used according to different detection results, which is specifically described as follows.

In a case that the M work groups in the display card shader include unallocated remaining work groups, a target work group for decoding may be allocated to the current compressed texture block from the remaining work groups. There may be one or more remaining work groups. In an embodiment, a remaining work group may be randomly selected from the remaining work groups as the target work group for decoding the current compressed texture block. In another embodiment, according to an ascending order of sequence number identifiers, a remaining work group with the smallest sequence number identifier in remaining work groups may be selected as the target work group for decoding the current compressed texture block. In another embodiment, in a case that the work groups in the display card shader have different decoding capabilities, according to decoding capabilities of remaining work groups, a remaining work group with the highest decoding capability may be selected or a remaining work group with a decoding capability greater than a capability threshold may be selected from the remaining work groups as the target work group for decoding the current compressed texture block.

In a case that all the work groups in the M work groups have been allocated for compressing texture blocks, one target work group for decoding may be allocated to the current compressed texture block from the M work groups. In an embodiment, a work group may be randomly selected from the M work groups as the target work group for decoding the current compressed texture block. In another embodiment, according to texture block quantities of compressed texture blocks to which the work groups are allocated, a work group with the smallest texture block quantity may be selected from the M work groups as the target work group for decoding the current compressed texture block. In this embodiment, the texture block quantities of the work groups can be effectively balanced to reduce the time of waiting for decoding of the current compressed texture block, thereby improving the decoding efficiency. In another embodiment, in a case that the work groups in the display card shader have different decoding capabilities, according to decoding capabilities of the work groups, a work group with the highest decoding capability may be selected or a work group with a decoding capability greater than a capability threshold may be selected from the M work groups as the target work group for decoding the current compressed texture block.

(1) As can be seen based on the foregoing description, a target work group may be allocated to one or more compressed texture blocks. In a case that a quantity (that is, M) of work groups in the display card shader is greater than or equal to a quantity of compressed texture blocks in the compressed texture resource, each target work group may be allocated to only one compressed texture block. In a case that the quantity (that is, M) of work groups in the display card shader is less than the quantity of compressed texture blocks in the compressed texture resource, some or all target work groups are allocated to at least two compressed texture blocks. (2) As can be seen based on the foregoing description, in the embodiments of the present disclosure, the compressed texture blocks in the compressed texture resource are sequentially traversed, to be sequentially allocated with the target work groups. However, in another specific implementation, a batch allocation mode may be used, in which the target work groups are allocated to the compressed texture blocks at the same time, which is not limited herein.

For example, the quantity of compressed texture blocks in the compressed texture resource is N, N being an integer greater than 1. In a case that M (the quantity of work groups in the display card shader) is greater than or equal to N, N target work groups for decoding may be selected in a batch from the M work groups in the display card shader, and then the N target work groups are respectively allocated to N compressed texture blocks, each target work group corresponding to one compressed texture block. In a case that M is less than N, the M work groups may all be used as target work groups, M compressed texture blocks are selected in a batch from the compressed texture resource, and then the M target work groups are respectively allocated to selected M compressed texture blocks, each target work group corresponding to one compressed texture block. In a case that a quantity of unselected compressed texture blocks in the N compressed texture blocks (that is, N-M) is less than M, N-M target work groups may be selected from the M work groups, and then the N-M target work groups are respectively allocated to the N-M unselected compressed texture blocks, each target work group corresponding to one compressed texture block. In a case that N-M is greater than or equal to M, the M work groups may all be selected as the target work groups, M compressed texture blocks are selected from the N-M unselected compressed texture blocks in batches, and then the M target work groups are respectively allocated to the M compressed texture blocks, each target work group corresponding to one compressed texture block. This is repeated until each target work group is allocated with a compressed texture block.

S203: Distribute each compressed texture block to a corresponding target work group.

S204: Invoke the target work groups in the display card shader in parallel to respectively decode received compressed texture blocks according to a texture compression format to obtain texture data of the image, the texture data including decoded data respectively corresponding to the compressed texture blocks.

In a possible embodiment, an embodiment of decoding the received compressed texture block by any target work group may include: obtaining a shader decoding file, and obtaining a target decoding parameter related to the compressed texture resource. The shader decoding file may include: a plurality of algorithm instructions used for decoding compressed texture resources in different texture compression formats. The target decoding parameter of the compressed texture resource may be used for indicating the texture compression format used in the image. Next, an algorithm instruction for decoding the compressed texture resource may be obtained from the shader decoding file according to the target decoding parameter, and a compressed texture block is decoded by using the obtained algorithm instruction, to obtain decoded data corresponding to the compressed texture block.

For example, the shader decoding file may include: a first algorithm instruction used for implementing decoding of a compressed texture resource in an ASTC format, a second algorithm instruction used for implementing decoding of a compressed texture resource in an ETC format, and the like. In a case that the target decoding parameter of the compressed texture resource indicates that the texture compression format used in the image is the ASTC format, the first algorithm instruction may be obtained from the shader decoding file according to the target decoding parameter, and the compressed texture block is decoded by using the first algorithm instruction. In a case that the target decoding parameter of the compressed texture resource indicates that the texture compression format used in the image is the ETC format, the second algorithm instruction may be obtained from the shader decoding file according to the target decoding parameter, and the compressed texture block is decoded by using the second algorithm instruction.

To facilitate decoding, a specific procedure of the foregoing decoding may be encapsulated into a decoding interface (glDispatchCompute) of a decoding pipeline, so that any target work group may directly invoke the decoding interface to decode a compressed texture block.

In a possible embodiment, after obtaining the texture data, the computer device may upload the texture data to a blockchain to prevent the texture data from being tampered. The blockchain is formed by a plurality of blocks, as shown in FIG. 3a. A genesis block includes a block header and a block body. The block header stores an input information eigenvalue, a version number, a timestamp, and a difficulty value. The block body stores input information. The genesis block is a parent block of a next block. The next block also includes a block header and a block body. The block header stores its input information eigenvalue, a block header eigenvalue of the parent block, a version number, a timestamp, and a difficulty value. The rest is deduced by analogy. In this way, block data stored in each block in the blockchain is associated with block data stored in the parent block, thereby ensuring the security of input information in the blocks. Based on this, a specific embodiment of uploading the texture data into the blockchain may be as follows.

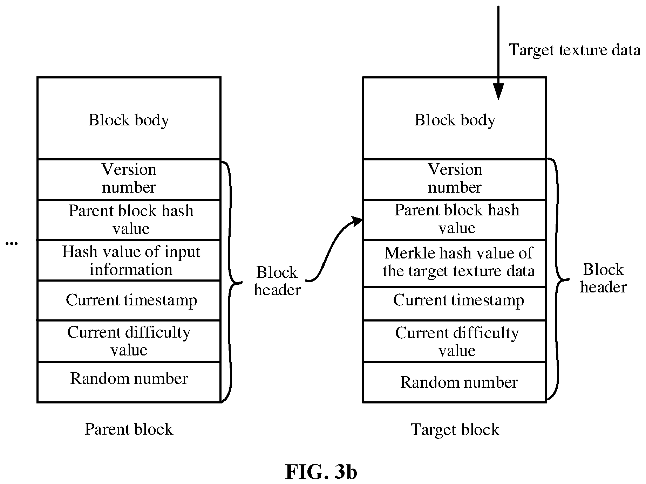

In a case that the computer device is located in a blockchain network, the computer device may first add the texture data to a block body of a target block, and perform a hash operation on the texture data in the block body to obtain a Merkle hash value. Next, one random number may be generated by using a random algorithm, and the calculated Merkle hash value, the random number, a version number, a previous block hash value, a current timestamp, and a current difficulty value form a block header of the target block, as shown in FIG. 3b. The version number is version information of a block protocol related to the blockchain. The previous block hash value is an eigenvalue of a block header of a previous block. The current timestamp is a system time at which the block header is formed. The current difficulty value is a difficulty value of calculation. The difficulty value is a fixed value within a fixed time period, and is determined again after the fixed time period. Next, one or more hash operations may be performed on content included in the block header by using an eigenvalue algorithm (for example, a SHA256 algorithm) to obtain an eigenvalue of the block header of the target block. A quantity of the hash operations may be determined according to a calculation difficulty. In a case that the calculation difficulty is higher, a quantity of hash operations is larger. After the target block is obtained by the foregoing steps, the target block may be broadcasted to consensus nodes in the blockchain network for consensus processing. After the consensus processing succeeds, the target block is added to the blockchain. In a case that the computer device is not located in the blockchain network, the texture data may be sent to a consensus node in the blockchain network, so that the consensus node performs the foregoing steps to store the texture data in the blockchain.

In a possible embodiment, the computer device may further perform cloud storage processing on the texture data by using a cloud technology. The cloud technology is a hosting technology that unifies a series of resources such as hardware, software, and networks in a wide area network or a local area network to implement computing, storage, processing, and sharing of data. The cloud technology is a general term of a network technology, an information technology, an integration technology, a management platform technology, an application technology, and the like based on cloud computing commercial mode applications, and may form a resource pool for use on demand, which is flexible and convenient. The cloud computing technology becomes an important support. Correspondingly, cloud storage is a concept extended and developed from the concept of cloud computing. A distributed cloud storage system (referred to as a storage system below) is a storage system that uses functions such as a cluster function, a grid technology, and a distributed storage file system to enable a large number of storage devices (the storage devices are also referred to as storage nodes) of various types in a network to collaborate through application software or an application interface set to jointly provide data storage and service access functions externally.

In the embodiments of the present disclosure, a display card shader is introduced, and a plurality of work groups independent of each other are deployed in advance in the display card shader. A compressed texture resource obtained by encoding an image by using a texture compression format includes a plurality of compressed texture blocks. After the compressed texture resource of the image is obtained, each compressed texture block is allocated with a target work group used for decoding, from the display card shader, and the compressed texture blocks are respectively sent to the target work groups. Next, the compressed texture blocks are decoded according to the texture compression format by invoking target work groups in the display card shader in parallel. In this way, not only the compressed texture resource is decoded, but also the compressed texture blocks are decoded in parallel, thereby effectively improving the decoding efficiency. In addition, the entire decoding process is implemented by using the display card shader, so that the entire decoding process does not require the participation of a CPU. In this way, resources of the CPU can be effectively saved, thereby effectively reducing the resource usage of the CPU and improving the running efficiency of a computer device.

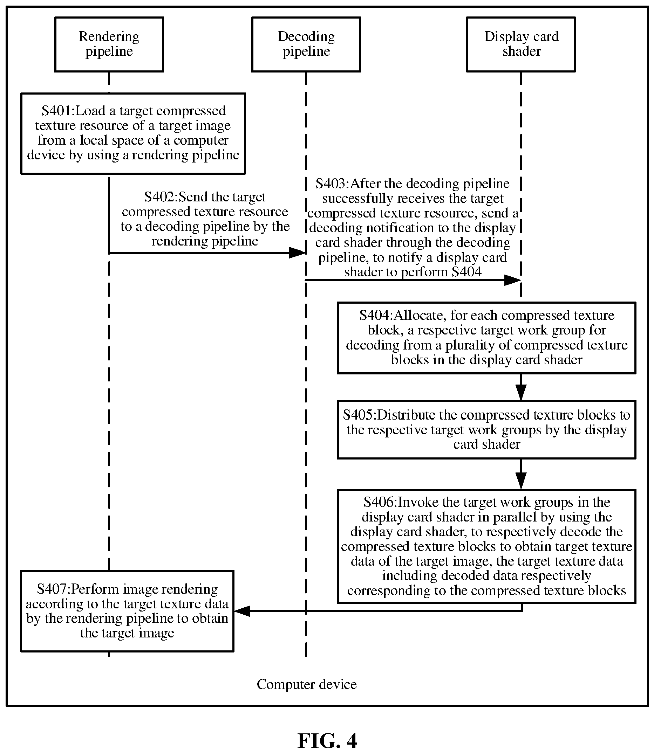

FIG. 4 is a schematic flowchart of an image processing method according to another embodiment of the present disclosure. The image processing method may be performed in the computer device discussed above. The computer device may include a rendering pipeline, a decoding pipeline, and a display card shader, and the display card shader works according to a procedure specified by the decoding pipeline. Referring to FIG. 4, the image processing method may include the following S401 to S407.

S401: Load a compressed texture resource of an image from a local space of a computer device by using a rendering pipeline.

In a possible implementation process, the rendering pipeline may load the compressed texture resource of the image from the local space of the computer device by invoking a texture resource loading interface (for example, glTexCompressedImage2D (an interface for loading a compressed texture resource)).

S402: Send the compressed texture resource to a decoding pipeline by the rendering pipeline.

In an embodiment, after successfully loading the compressed texture resource, the rendering pipeline may directly send the compressed texture resource to the decoding pipeline. In another embodiment, a display card decoding mode (or referred to as a display card decoding function) may be set for the computer device. The display card decoding mode is a mode of performing decoding by a display card shader. In a case that the display card decoding mode is in an on state, it indicates that the display card shader supports decoding. In a case that the display card decoding mode is in an off state, it indicates that the display card shader does not support decoding. In this case, decoding may be performed by using a display card driver central processing unit (refers to as a display card driver CPU for short). It can be seen that, by providing the display card decoding mode, a user can turn on or off the display card decoding mode as needed, to flexibly choose whether to perform decoding by the display card shader. Based on this, in a case that the computer device is provided with the display card decoding mode, before performing S402, the rendering pipeline may first detect a mode status of the display card decoding mode, the mode status including an on state and an off state. In a case that the mode status is the on state, the step of distributing the compressed texture resource to the decoding pipeline by the rendering pipeline is performed, that is, S402 is performed. In a case that the mode status is the off state, a display card driver CPU may be invoked by the rendering pipeline to decode the compressed texture blocks in the compressed texture resource to obtain the texture data of the image. That is, in this case, after obtaining the texture data by using the display card driver CPU, the rendering pipeline may directly perform S407. That is, in this case, S402 to S406 do not need to be performed.

S403: After the decoding pipeline successfully receives the compressed texture resource, send a decoding notification to the display card shader through the decoding pipeline, to notify a display card shader to perform S404.

S404: Allocate, for each compressed texture block, a respective target work group for decoding from a plurality of compressed texture blocks in the display card shader.

It may be understood that a same target work group may be allocated to one or more compressed texture blocks.

S405: Distribute the compressed texture blocks to the respective target work groups by the display card shader.

S406: Invoke the target work groups in the display card shader in parallel by using the display card shader, to respectively decode the compressed texture blocks to obtain texture data of the image, the texture data including decoded data respectively corresponding to the compressed texture blocks.

S407: Perform image rendering according to the texture data by the rendering pipeline to obtain the image.

As can be seen from the foregoing description, the texture data may be obtained through decoding in S404 to S406 by the display card shader or may be obtained through decoding by the display card driver CPU invoked by the rendering pipeline. In a case that the texture data is obtained through decoding by the display card driver CPU invoked by the rendering pipeline, an embodiment of S407 may be: directly invoking, by the rendering pipeline, a rendering interface (for example, glDraw (an interface for image rendering)) to perform image rendering according to the texture data to obtain the image. In a case that the texture data is obtained through decoding by the display card shader, for a specific embodiment of S407, reference may be made to the following description.

In a possible embodiment, the rendering pipeline may have a physical first texture memory space, and the decoding pipeline may have a physical second texture memory space. The first texture memory space is a graphic memory space configured to store data to be processed by the rendering pipeline or data already processed by the rendering pipeline. The second texture memory space is a graphic memory space configured to store data to be processed by the decoding pipeline or data already processed by the decoding pipeline. The graphic memory space is a storage space in a display card. In this case, after decoding a received compressed texture block, any target work group in the display card shader may buffer decoded data in the second texture memory space. After the decoded data respectively corresponding to the compressed texture blocks is buffered in the second texture memory space, that is, the texture data of the image is buffered in the second texture memory space, the decoding pipeline may copy the texture data of the image from the second texture memory space into the first texture memory space by using a CPU. Alternatively, after the texture data of the image is buffered in the second texture memory space, the decoding pipeline may notify the rendering pipeline, and the rendering pipeline copies the texture data of the image from the second texture memory space into the first texture memory space by using the CPU. In this case, the embodiment of S407 may be: performing, by the rendering pipeline, image rendering in the first texture memory space according to the texture data to obtain the image.

It has been shown in practice that when the texture data is copied by using the CPU, a performance loss of 1 ms to 5 ms may be caused. To take full advantage of the decoding pipeline and reduce the performance loss, , an embodiment of the present disclosure provide a sharing manner that the decoding pipeline and the rendering pipeline use the same physical space but different virtual spaces, so that a same physical texture storage space is not only used by the rendering pipeline to store a compressed texture resource and other data, but also used by the decoding pipeline to buffer the texture data decoded by the display card shader. In this way, the performance loss caused by the CPU copying the texture data can be avoided. Based on this, the embodiments of the present disclosure provide another implementation, which is described in detail below.

In an embodiment, the rendering pipeline may have a virtual first display card address space, and the decoding pipeline may have a virtual second display card address space. Each of the first display card address space and the second display card address space has a mapping relationship with the same texture storage space. The texture storage space is essentially a physical storage space (that is, a storage space that actually exists). In this case, after a target work group in the display card shader decodes a corresponding compressed texture block, decoded data obtained by the target work group may be buffered in the texture storage space according to the mapping relationship between the second display card address space and the texture storage space. In this case, an embodiment of S407 may be: after decoded data respectively corresponding to the compressed texture blocks are all stored in the texture storage space, the rendering pipeline performs, according to the mapping relationship between the first display card address space and the texture storage space, image rendering according to the texture data in the texture storage space to obtain the image. Optionally, to enable the rendering pipeline to perform image rendering in time, after the display card shader stores the decoded data corresponding to all the compressed texture blocks in the texture storage space, the decoding pipeline may send a decoding end notification to the rendering pipeline, to notify the rendering pipeline to perform image rendering in the texture storage space according to the texture data.

A specific manner of mapping the first display card address space and the second display card address space into the same physical texture storage space is as follows: allocating, by the rendering pipeline, the texture storage space to the image from a local space of the computer device; mapping, by the rendering pipeline, the first display card address space to the texture storage space, and sending a space identifier (for example, a space address of the texture storage space, and a space sequence number) of the texture storage space to the decoding pipeline; and mapping, by the decoding pipeline, the second display card address space to the texture storage space according to the space identifier. The time points at which the rendering pipeline and the decoding pipeline perform space mapping operations are not limited in the embodiments of the present disclosure. For example, the rendering pipeline may perform allocation and mapping of the texture storage space during, before or after loading the compressed texture resource of the image. In another example, the decoding pipeline may perform the space mapping operation immediately after receiving the space identifier sent by the rendering pipeline; or may perform the space mapping operation after receiving the compressed texture resource distributed by the rendering pipeline. Further, the space identifier and the compressed texture resource may be together sent to the decoding pipeline by the rendering pipeline or may be sent to the decoding pipeline separately, which is not limited herein.

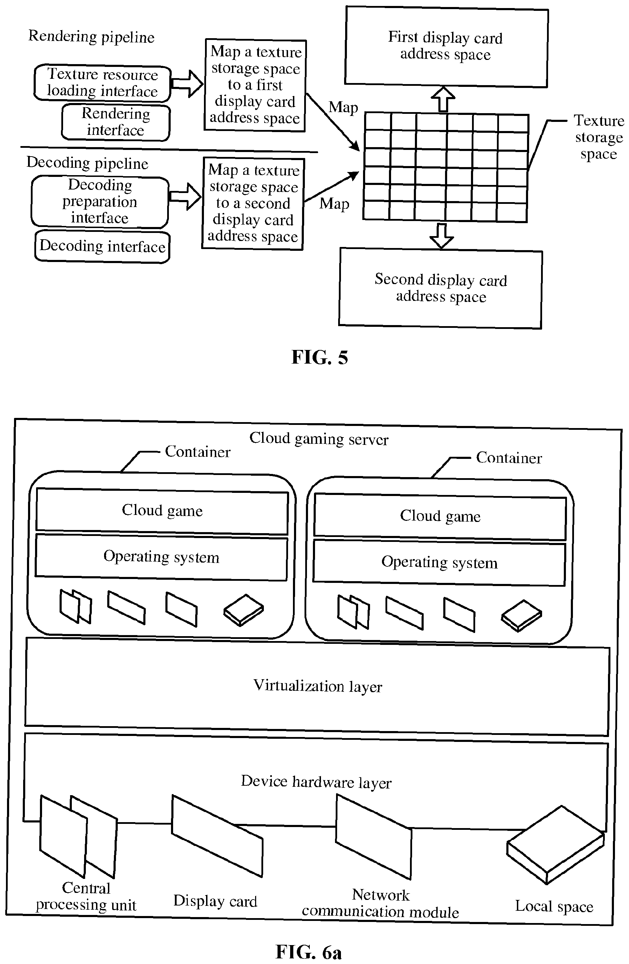

A specific manner of mapping the first display card address space and the second display card address space to the same physical texture storage space is further schematically described below with reference to the schematic diagram of space mapping shown in FIG. 5. Referring to FIG. 5, the rendering pipeline may allocate a texture storage space (physical pages) in a process of loading the compressed texture resource of the image by using glTexCompressedImage2D (an interface for loading a compressed texture resource), and map the texture storage space to the first display card address space of the rendering pipeline; and send the space identifier of the texture storage space to the decoding pipeline, to trigger the decoding pipeline to decode the compressed texture resource into the texture storage space. The decoding pipeline may receive the space identifier sent by the rendering pipeline, and map the texture storage space indicated by the space identifier to the second display card address space of the decoding pipeline by using astc_cs_decode (a decoding preparation interface).

In a possible embodiment, in a case that the display card shader fails to decode all or some compressed texture blocks in the compressed texture resource, a display card driver CPU may be invoked to decode the compressed texture blocks in the compressed texture resource to obtain the texture data of the image.

In the embodiments of the present disclosure, the entire decoding process is implemented by using the display card shader, so that the entire decoding process does not require the participation of a CPU. In this way, resources of the CPU can be effectively saved, thereby effectively reducing the resource usage of the CPU and improving the running efficiency of a computer device. Further, compressed texture blocks are respectively decoded by invoked target work groups in the display card shader in parallel, so that the decoding efficiency can be effectively improved. In addition, by sharing the same physical texture storage space between the decoding pipeline and the rendering pipeline, the performance loss caused by copying data by the CPU can be effectively reduced, which improves the timeliness of image rendering and the overall image processing efficiency.

In the foregoing method embodiment shown in FIG. 4, in a case that the image is a game image in a game, the game usually has a game resource package. The game resource package is used for storing various data resources required for running the game. Therefore, after encoding various game images in the game by using the texture compression format to obtain the compressed texture resources of the game images, a game developer may perform offline decoding on the compressed texture resource of one or more game pictures in the game in advance, construct an offline decoded data set of the game by using the decoded texture data and image identifiers of the corresponding game images, and add the offline decoded data set to the game resource package of the game.

In this case, before performing S402, the rendering pipeline may first obtain the offline decoded data set of the game. In a possible embodiment, the offline decoded data set of the game may be obtained from the game resource package of the game. The offline decoded data set includes image identifiers of one or more game images in the game and texture data associated with each image identifier. Texture data associated with an image identifier is obtained by performing offline decoding on a compressed texture resource of a game image indicated by the image identifier. Next, the rendering pipeline determines whether an image identifier of the image is included in the offline decoded data set, to detect whether the offline decoded data set includes texture data of the game image. In a case that the image identifier of the image is not included, the rendering pipeline performs S402. In a case that the image identifier of the image is included, texture data associated with the hit image identifier is loaded from the offline decoded data set by using the rendering pipeline, and the loaded texture data is used as the texture data of the image. In this way, the time used for obtaining the texture data can be effectively reduced, thereby improving the decoding efficiency.

In a possible embodiment, as can be seen from the foregoing description of S402, before performing S402, the rendering pipeline may first perform the step of detecting a mode status of the display card decoding mode. In this case, the rendering pipeline may perform the determination of whether the image identifier of the image is included in the offline decoded data set before or after detecting the mode status of the display card decoding mode. For example, the determination is performed before detecting the status of the display card decoding mode, in which case the processing of the rendering pipeline is as follows: determining, by the rendering pipeline, whether the image identifier of the image is included in the offline decoded data set; in a case that the image identifier of the image is not included in the offline decoded data set, performing, by the rendering pipeline, the step of detecting a mode status of the display card decoding mode; and in a case that the image identifier of the image is included in the offline decoded data set, loading, by the rendering pipeline, texture data associated with the hit image identifier from the offline decoded data set, and determining the loaded texture data as the texture data of the image.

As can be seen from the foregoing description, in an image processing process, the rendering pipeline may invoke a display card driver CPU to decode the compressed texture blocks in the compressed texture resource. For example, after detecting that the mode status of the display card decoding mode is the off state, the rendering pipeline may invoke the display card driver CPU to decode the compressed texture blocks in the compressed texture resource. In another example, in a case that the display card shader fails to decode all or some compressed texture blocks in the compressed texture resource, the rendering pipeline may invoke the display card driver CPU to decode the compressed texture blocks in the compressed texture resource. Further, it is considered that the display card driver CPU may have or not have a decoding capability of decoding the compressed texture resource. In a case that the display card driver CPU does not have the decoding capability but is still invoked to decode the compressed texture resource, the compressed texture resource cannot be decoded. Therefore, in a case that the display card driver CPU does not have the decoding capability, the rendering pipeline may directly invoke a game engine CPU of the game to decode the compressed texture resource. In this way, not only the compressed texture resource can be successfully decoded so that the image is successfully rendered and displayed, but also the problem of a waste of processing resources caused when the display card driver CPU performs useless decoding can be avoided.

Based on this, before invoking the display card driver CPU to decode the compressed texture blocks in the compressed texture resource, the rendering pipeline may further detect whether the display card driver CPU has the capability of decoding the compressed texture resource. In response to detecting that the display card driver CPU has the decoding capability, the step of invoking a display card driver CPU by the rendering pipeline to decode the compressed texture blocks in the compressed texture resource is performed. In response to detecting that the display card driver CPU does not have the decoding capability, a game engine CPU of the game is invoked by the rendering pipeline to decode the compressed texture blocks in the compressed texture resource to obtain the texture data of the image. A specific time point at which the rendering pipeline detects whether the display card driver CPU has the capability of decoding the compressed texture resource is not limited in the embodiments of the present disclosure. For example, in another embodiment, the rendering pipeline may detect the decoding capability before obtaining the offline decoded data set of the game. In this case, the processing the rendering pipeline is as follows: detecting whether the display card driver CPU has the capability of decoding the compressed texture resource; in response to detecting that the display card driver CPU has the decoding capability, performing, by the rendering pipeline, the step of obtaining an offline decoded data set of the game; and in response to detecting that the display card driver CPU does not have the decoding capability, invoking, by the rendering pipeline, a game engine CPU of the game to decode the compressed texture blocks in the compressed texture resource to obtain the texture data of the image.

The game discussed above may be a conventional game or a cloud game. The conventional game is a game that is directly run in a game client installed on a terminal device used by a player user. The cloud game may also be referred to as gaming on demand, and is a gaming mode based on cloud computing. The cloud computing is a computing mode based on the Internet. In a scenario of a cloud game, the game is run in a cloud game server instead of a game client of a player user. The cloud game server encodes game pictures in a game scene into a video stream and transmits the video stream to the game client of the player user over a network for playing. In a case that the game is a conventional game, the computer device discussed above is a terminal device used by a player user. In a case that the game is a cloud game, the computer device discussed above is a cloud game server running the cloud game.

Referring to FIG. 6A, the cloud game server may include a device hardware layer, a virtualization layer (Hypervisor), one or more containers, and the like. The device hardware layer may include, but not limited to, a CPU, a display card, a network communication module, a local space for storage, and the like. The display card may include a display card shader, a decoding pipeline, a rendering pipeline, and the like. The virtualization layer is mainly configured to implement in a software manner a virtual environment identical to a physical host environment. The cloud game server may deploy and run the one or more containers through the virtualization layer. The container is a type of virtualization on an operating system level and is configured to carry an operating system. Each container may be connected to one or more game clients, and each container may be configured to run one or more cloud games. In a process of running a cloud game by a container, the container may transmit game pictures of the cloud game to the connected game client for display.

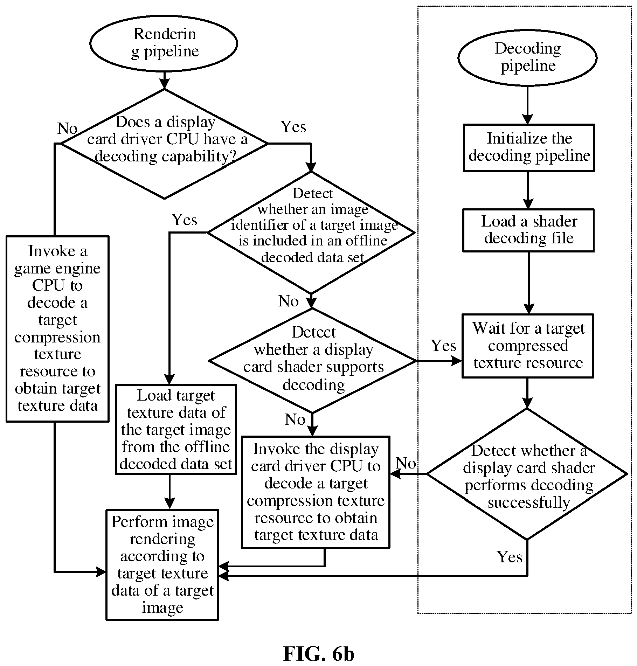

Based on the foregoing description, the embodiments of the present disclosure further provide an image processing method shown in FIG. 6b. In the embodiments of the present disclosure, an example in which the game is a cloud game, that is, the computer device is a cloud game server is mainly used for description. That is, the image processing method shown in FIG. 6b may be performed on the cloud game server, and specifically may be performed in a display card in the cloud game server. Referring to FIG. 6b, a procedure of the image processing method is as follows.

First, a decoding pipeline may be initialized (created). For example, an independent thread may be created in an initialization process of a game, and the decoding pipeline is initialized by using the independent thread. Next, a shader decoding file may be loaded, and a display card shader creates a decoding manager. The decoding manager is configured to receive a compressed texture resource of an image.

After a rendering pipeline has loaded the compressed texture resource, it may be detected whether a display card driver CPU has a decoding capability. In a case that the display card driver CPU does not have a decoding capability, the rendering pipeline invokes a game engine CPU to decode the compressed texture resource to obtain texture data of the image. In a case that the display card driver CPU has a decoding capability, the rendering pipeline may further detect whether an image identifier of the image is included in an offline decoded data set, to detect whether the offline decoded data set includes texture data of a game image. In a case that the image identifier of the image is included in an offline decoded data set, the rendering pipeline loads the texture data of the image from the offline decoded data set. In a case that the image identifier of the image is not included in an offline decoded data set, the rendering pipeline may detect a mode status of a display card decoding mode, to detect whether the display card shader supports decoding. In response to detecting that the display card shader does not support decoding, the rendering pipeline invokes the display card driver CPU to decode the compressed texture resource to obtain texture data of the image. In response to detecting that the display card shader does not support decoding, the rendering pipeline distributes the compressed texture resource of the image to the decoding pipeline.

Correspondingly, after receiving the compressed texture resource distributed by the rendering pipeline, the decoding pipeline may send the compressed texture resource to the display card shader through the decoding manager, and notify the display card shader to decode the compressed texture resource. For example, the display card shader may allocate target work groups respectively to the compressed texture blocks in the compressed texture resource for decoding, and distribute each compressed texture block to a corresponding target work group. Next, the target work groups in the display card shader are invoked in parallel, to respectively decode received compressed texture blocks to obtain texture data of the image. The decoding pipeline may detect in real time or periodically whether the display card shader has succeeded in decoding. In a case that the decoding succeeds, the decoding pipeline notifies the rendering pipeline to perform image rendering according to the texture data of the image. In a case that the decoding fails, the decoding pipeline notifies the rendering pipeline to decode the compressed texture resource by using the display card driver CPU, and after the texture data is obtained through decoding, perform image rendering according to the texture data of the image.

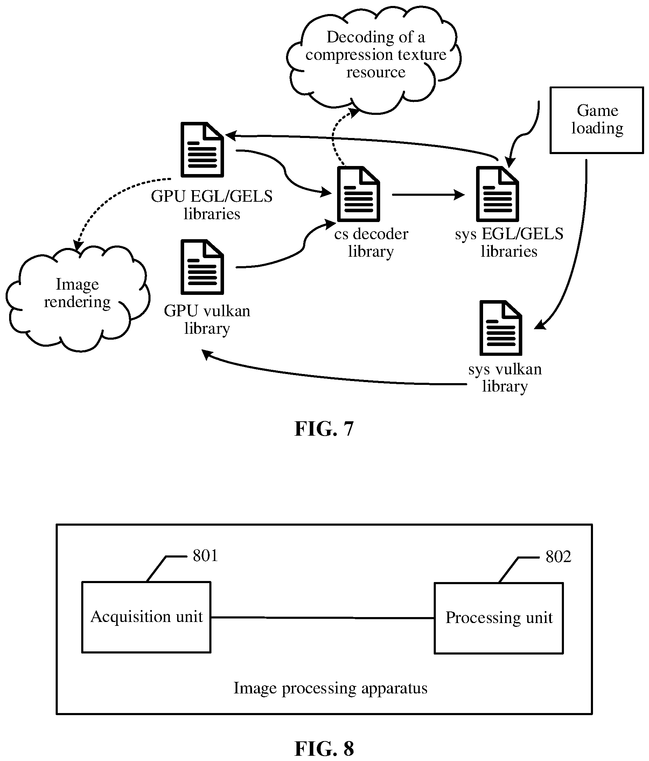

For the foregoing method embodiments shown in FIG. 2, FIG. 4, and FIG. 6b, the following two points need to be described.
1) In an embodiment of the present disclosure, a decoding procedure performed by the display card shader in the foregoing method embodiments shown in FIG. 2, FIG. 4, and FIG. 6b is encapsulated into an SDK. That is, the decoding procedure performed by the display card shader may be independently encapsulated in a SDK (which may be named a cs decoder library), to be invoked to decode a compressed texture resource of any image when needed. For a schematic diagram of the principle of invoking the SDK, reference may be made to FIG. 7. After the game is loaded, a sys vulkan library (a system vulkan rendering interface) may be first invoked. Next, a GPU vulkan library (a GPU vulkan rendering interface) may be invoked by the sys vulkan library, and then the cs decoder library may be invoked by the GPU vulkan library to implement decoding. Alternatively, sys EGL/GELS libraries (a system EGL/GELS rendering interface) may be first invoked. Next, GPU EGL/GELS libraries (a GPU EGL/GELS rendering interface) may be invoked by the sys EGL/GELS libraries, and then the cs decoder library may be invoked by the GPU EGL/GELS libraries to implement decoding.
The vulkan discussed above is a cross-platform 2D and 3D drawing application interface. GELS is short for OpenGL ES (OpenGL for Embedded Systems), and is a subset of a 3D graphic API of OpenGL (a cross-language, cross-platform application programming interface for rendering 2D and 3D graphics). EGL is an intermediate interface layer between the OpenGL Establish rendering interface and a native platform window system. The independent encapsulation of an SDK may have the following beneficial effects: (1) A potential rendering risk introduced by excessive modifications to a display card driver is avoided; (2) The independence from the rendering pipeline is ensured, which avoids damage to a rendering state machine of a game; and (3) The display card shader is used to support an openGLES rendering interface and a vulkan rendering interface in the display card driver, which avoids reinventing the wheel.
2) In summary, in a case that the image is a game image in a game, the embodiments of the present disclosure may provide the following manners for decoding a target compression resource of the image: (1) decoding through a game engine CPU; (2) decoding through a display card driver CPU; (3) decoding through a display card shader; and (4) decoding through an offline decoded data set. The essence of both the decoding manner (1) and the decoding manner (2) is decoding through a CPU. In the embodiments of the present disclosure, decoding time required for the decoding through a CPU, the decoding through an offline decoded data set, and the decoding through a display card shader is tested by using compressed texture resources of different sizes in an ASTC format. For test results, reference may be made to the following Table 1:

**Table 1**

| Size of a compressed texture resource (a compression resource block being 6×6) | CPU | Offline decoded data set | Display card shader |
|---|---|---|---|
| 256×256 | 3 ms | 0 ms | 1 ms |
| 512×2512 | 12 ms | 0 ms | 2 ms |
| 1024×1024 | 50 ms | 2 ms | 5 ms |
| 2048×2048 | 79 ms | 2 ms | 9 ms |

| | | | |
|---|---|---|---|
| "ms" in Table 1 represents millisecond. As can be seen from Table 1, the decoding manner of the decoding through an offline decoded data set requires the shortest decoding time and has the best decoding performance. The decoding time required for decoding through a display card shader is much shorter than the decoding time required for decoding through a CPU. That is, the decoding performance of the decoding through a display card shader is better than the decoding performance of the decoding through a CPU. | | | |

In the embodiments of the present disclosure, a compressed texture resource in a texture compression format in a game can be quickly decoded in real time by using the strong floating point operation capability and the strong parallel computing capability of a display card in a cloud game server, thereby achieving quick rendering and display of an image. In this way, the smoothness of gaming can be effectively improved, the CPU resource usage can be reduced, problems of game freezes and low frame rates caused by slow CPU decoding can be resolved, and also the problem of high operation cost due to a limited number of concurrent game paths caused by excessive CPU resources occupied by a game on a single path of a cloud game server can be resolved. In addition, the entire decoding process is performed in the cloud game server, so that the entire decoding process is not limited by a terminal type or an operating system but is effective for all terminals. In addition, because the embodiments of the present disclosure support the decoding of a compressed texture resource by a display card shader, a game developer does not need to specially make modifications and adaptations to the logic of a cloud game to create an offline decoded data set satisfying a decoding condition of the cloud game server, thereby achieving high applicability and compatibility. Moreover, the problem of excessive use of memory for storing a game resource package of a cloud game caused by offline decoding of compressed texture resources of game images can be resolved.

Based on the description of the embodiments of the foregoing image processing method, an image processing apparatus is further provided in the embodiments of the present disclosure. The image processing apparatus may be a computer program (including program code) running on a computer device. The image processing apparatus may perform the method shown in FIG. 2, FIG. 4 or FIG. 6b. Referring to FIG. 8, the image processing apparatus may run the following units.

An obtaining unit 801 is configured to obtain a compressed texture resource of an image, the compressed texture resource being obtained by encoding the image by using a texture compression format, and the compressed texture resource including a plurality of compressed texture blocks.

A processing unit 802 is configured to: allocate, in a display card shader, a plurality of target work groups for respectively decoding the plurality of compressed texture blocks, and distribute each compressed texture block to a corresponding target work group.

The processing unit 802 is further configured to: invoke the target work groups in the display card shader in parallel, to respectively decode the received compressed texture blocks according to the texture compression format to obtain texture data of the image, the texture data including decoded data respectively corresponding to the compressed texture blocks.

In an embodiment, the display card shader includes work groups independent of each other, each of the work groups is a sub-processing unit with a decoding capability, and each of the target work groups decodes a received compressed texture block by using an algorithm instruction used for decoding the compressed texture resource.

In an embodiment, the display card shader is arranged in the computer device, the computer device further includes a rendering pipeline and a decoding pipeline, and the display card shader works according to a procedure specified in the decoding pipeline; and correspondingly, the processing unit 802 may be further configured to:

perform image rendering according to the texture data by using the rendering pipeline to obtain the image.

In another embodiment, the rendering pipeline includes a virtual first display card address space, and the decoding pipeline includes a virtual second display card address space; and
each of the first display card address space and the second display card address space has a mapping relationship with a same texture storage space.

In another embodiment, the processing unit 802 may be further configured to: buffer by any one of the target work groups in the display card shader after obtaining decoded data by decoding a received compressed texture block, the decoded data in the texture storage space, the texture storage space being determined according to the mapping relationship between the second display card address space and the texture storage space; and
correspondingly, to perform image rendering according to the texture data by using the rendering pipeline to obtain the image, the processing unit 802 may be further configured to:
after decoded data corresponding to the compressed texture blocks are all stored in the texture storage space, perform, by the rendering pipeline, image rendering according to the texture data in the texture storage space to obtain the image, the texture storage space being determined according to the mapping relationship between the first display card address space and the texture storage space.

In another embodiment, the processing unit 802 may be further configured to:
allocate the texture storage space to the image from a local space of the computer device by using the rendering pipeline;
map the first display card address space to the texture storage space by using the rendering pipeline, and send a space identifier of the texture storage space to the decoding pipeline; and
map the second display card address space to the texture storage space by using the decoding pipeline according to the space identifier.

In another embodiment, to obtain a compressed texture resource of an image, the obtaining unit 801 may be further configured to: load the compressed texture resource of the image from a local space of the computer device by using the rendering pipeline; and
correspondingly, the processing unit 802 may be further configured to:
send the compressed texture resource to the decoding pipeline by using the rendering pipeline; and
send, by the decoding pipeline after successfully receiving the compressed texture resource, a decoding notification to the display card shader, to notify the display card shader to allocate, in the display card shader, the plurality of target work groups for respectively decoding the plurality of compressed texture blocks.

In another embodiment, the computer device is provided with a display card decoding mode, the display card decoding mode being a mode of performing decoding by using the display card shader; and correspondingly, the processing unit 802 may be further configured to:
detect a mode status of the display card decoding mode by using the rendering pipeline, the mode status including an on state or an off state;
in a case that the mode status is the on state, perform the step of sending the compressed texture resource to the decoding pipeline by using the rendering pipeline; and
in a case that the mode status is the off state, invoke a display card driver CPU by using the rendering pipeline to decode the compressed texture blocks in the compressed texture resource to obtain the texture data of the image.

In another embodiment, the image is a game image in a game; and correspondingly, the processing unit 802 may be further configured to:
obtain an offline decoded data set of the game by using the rendering pipeline, the offline decoded data set including image identifiers of one or more game images in the game and including texture data respectively associated with the image identifiers, texture data associated with any one of the image identifiers being obtained by performing offline decoding on a compressed texture resource of a game image indicated by the any image identifier;
determine, by the rendering pipeline, whether an image identifier of the image is included in the offline decoded data set;
detect, by the rendering pipeline in a case that the image identifier of the image is not included in the offline decoded data set, the mode status of the display card decoding mode; and
load, by the rendering pipeline in a case that the image identifier of the image is included in the offline decoded data set, texture data associated with the image identifier from the offline decoded data set, and determine the loaded texture data as the texture data of the image.

In an embodiment, the step of allocating a plurality of target work groups for respectively decoding the plurality of compressed texture blocks in a display card shader is performed in a case that the image identifier of the image is not included in the offline decoded data set; and in a case that the image identifier of the image is included in the offline decoded data set, the texture data of the image is loaded from the offline decoded data set.

In another embodiment, the processing unit 802 may be further configured to:
detect, by the rendering pipeline, whether the display card driver CPU has a decoding capability of decoding the compressed texture resource;
in response to detecting that the display card driver CPU has the decoding capability, perform the step of obtaining an offline decoded data set of the game by using the rendering pipeline; and
in response to detecting that the display card driver CPU does not have the decoding capability, invoke a game engine CPU of the game by using the rendering pipeline to decode the compressed texture blocks in the compressed texture resource to obtain the texture data of the image.

In another embodiment, the processing unit 802 may be further configured to:
in a case that the display card shader fails to decode all or some compressed texture blocks in the compressed texture resource, invoke a display card driver CPU to decode the compressed texture blocks in the compressed texture resource to obtain the texture data of the image.

In another embodiment, the display card shader includes M work groups, M being an integer greater than 1; and correspondingly, to allocate a plurality of target work groups for decoding to a plurality of compressed texture blocks in a display card shader, the processing unit 802 may be further configured to:
traverse the plurality of compressed texture blocks, and determine a current compressed texture block being traversed currently;
in a case that the M work groups in the display card shader include one or more unallocated remaining work groups, allocate one target work group for decoding the current compressed texture block from the remaining work groups; and
in a case that all the work groups in the M work groups have been allocated to the compressed texture blocks, allocate one target work group for decoding the current compressed texture block from the M work groups.

In another embodiment, a decoding procedure performed by the display card shader is independently encapsulated in a software development kit (SDK) to be invoked to perform decoding of a compressed texture resource of any image.

According to another embodiment of the present disclosure, units in the image processing apparatus shown in FIG. 8 may be separately or wholly combined into one or several other units, or one (or more) of the units herein may further be divided into multiple units of smaller functions, which can implement the same operations and have the same technical effects. The foregoing units are divided based on logical functions. In an actual application, a function of one unit may be implemented by a plurality of units, or functions of a plurality of units are implemented by one unit. In other embodiments of the present disclosure, the image processing apparatus may include other units. During actual application, the functions may be cooperatively implemented by other units and may be cooperatively implemented by a plurality of units.

According to another embodiment of the present disclosure, a computer program (including program code) that can perform the steps in the corresponding method shown in FIG. 2 may run on a general computing device, such as a computer, which include processing elements and storage elements such as a CPU, a random access memory (RAM), and a read-only memory (ROM), to construct the image processing apparatus shown in FIG. 8, and implement the image processing method in the embodiments of the present disclosure. The computer program may be recorded in, for example, a computer readable recording medium, and may be loaded into the foregoing computing device by using the computer readable recording medium, and run in the computing device.

In the embodiments of the present disclosure, a display card shader is introduced, and a plurality of work groups independent of each other are deployed in advance in the display card shader. A compressed texture resource obtained by encoding an image by using a texture compression format includes a plurality of compressed texture blocks. After the compressed texture resource of the image is obtained, target work groups for decoding may be respectively allocated in the display card shader to the compressed texture blocks, and the compressed texture blocks are distributed to the respective target work groups. Next, the received compressed texture blocks may be decoded according to the texture compression format by invoking the target work groups in the display card shader in parallel. In this way, not only the decoding of the compressed texture resource can be implemented, but also parallel decoding of the compressed texture blocks can be implemented, thereby effectively improving the decoding efficiency. In addition, the entire decoding process is implemented by using the display card shader, so that the entire decoding process does not require the participation of a CPU. In this way, resources of the CPU can be effectively saved, thereby effectively reducing the resource usage of the CPU and improving the running efficiency of a computer device.

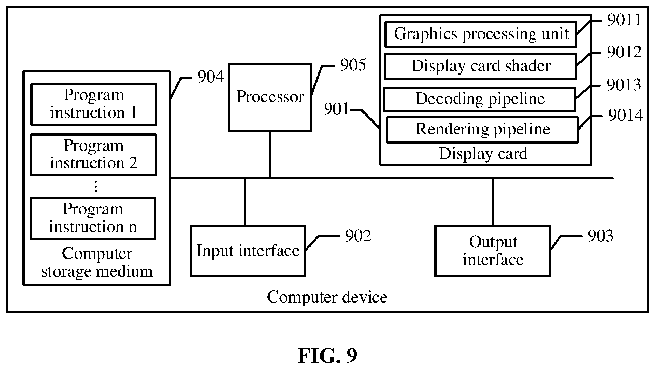

Based on the descriptions of the foregoing method embodiments and apparatus embodiments, the embodiments of the present disclosure further provide a computer device. Referring to FIG. 9, the computer device at least includes a display card 901, an input interface 902, an output interface 903, and a computer storage medium 904. The display card 901, the input interface 902, the output interface 903, and the computer storage medium 904 in the computer device may be connected by a bus or in another manner. The display card 901 may further include a GPU 9011, a display card shader 9012, a decoding pipeline 9013, a rendering pipeline 9014. The computer storage medium 904 may be stored in a memory of the computer device. The computer storage medium 904 is configured to store a computer program. The computer program includes program instructions. The processor 901 is configured to execute the program instructions stored in the computer storage medium 904. Further, the computer device may further include a CPU 905. The CPU 905 is a computing core and a control core of the computer device, is suitable for implementing one or more instructions, and is specifically suitable for loading and executing one or more instructions to implement a corresponding method procedure or a corresponding function.

In an embodiment, the display card 901 in the embodiments of the present disclosure may be configured to perform a series of image processing, specifically including: obtaining a compressed texture resource of an image, the compressed texture resource being obtained by encoding the image by using a texture compression format, the compressed texture resource including a plurality of compressed texture blocks; allocating, in a display card shader, a plurality of target work groups for respectively decoding the plurality of compressed texture blocks, and distributing the compressed texture blocks to the respective target work groups; and invoking the target work groups in the display card shader in parallel, to decode the compressed texture blocks according to the texture compression format to obtain texture data of the image, the texture data including decoded data respectively corresponding to the compressed texture blocks, and the like.

The embodiments of the present disclosure further provide a computer storage medium, and the computer storage medium is a memory device in a computer device and is configured to store programs and data. It may be understood that the computer storage medium herein may include an internal storage medium of the computer device and certainly may also include an extended storage medium supported by the computer device. The computer storage medium provides storage space, and the storage space stores an operating system of the computer device. In addition, the storage space further stores one more programs instructions suitable for being loaded and executed by the display card 901. The instructions may be one or more computer programs (including program code). The computer storage medium herein may be a high-speed RAM or a non-volatile memory, for example, at least one magnetic disk memory. Optionally, the computer storage medium may further be at least one computer storage medium located away from the foregoing processor.

In an embodiment, the display card 901 may load and execute one or more instructions stored in the computer storage medium to implement corresponding steps in the method in the embodiment of the foregoing image processing method shown in FIG. 2, FIG. 4 or FIG. 6b. During specific implementation, the one or more instructions stored in the computer storage medium are loaded by the display card 901 to perform the image processing method provided in the embodiments of the present disclosure.

According to an aspect of the present disclosure, a computer program product or a computer program is further provided, the computer program product or the computer program including computer instructions, the computer instructions being stored in a computer-readable storage medium. A processor of a computer device reads the computer instructions from the computer-readable storage medium, and executes the computer instructions to cause the computer device to perform the methods provided in the various optional manners in the embodiment aspects of the foregoing image processing method shown in FIG. 2, FIG. 4 or FIG. 6b.

In addition, what is disclosed above is merely exemplary embodiments of the present disclosure, and certainly is not intended to limit the scope of the claims. Therefore, equivalent variations made in accordance with the claims shall fall within the scope of the present disclosure.

## Claims

1. An image processing method, the method being performed by a computer device, and comprising:
obtaining a compressed texture resource of an image, the compressed texture resource being obtained by encoding the image by using a texture compression format, the compressed texture resource comprising a plurality of compressed texture blocks;
allocating, in a display card shader, a plurality of target work groups for respectively decoding the plurality of compressed texture blocks, and distributing the compressed texture blocks to the respective target work groups; and
invoking the target work groups in the display card shader in parallel, to respectively decode the compressed texture blocks according to the texture compression format to obtain texture data of the image, the texture data comprising decoded data respectively corresponding to the compressed texture blocks.

2. The method according to claim 1, wherein the display card shader includes work groups independent of each other, each of the work groups is a sub-processing unit with a decoding capability, and each of the target work groups decodes a received compressed texture block by using an algorithm instruction used for decoding the compressed texture resource.

3. The method according to claim 1, wherein the display card shader is arranged in the computer device, the computer device further comprises a rendering pipeline and a decoding pipeline, and the display card shader works according to a procedure specified by the decoding pipeline; and
the method further comprises:
performing, by the rendering pipeline, image rendering according to the texture data to obtain the image.

4. The method according to claim 3, wherein the rendering pipeline comprises a virtual first display card address space, and the decoding pipeline comprises a virtual second display card address space; and
each of the first display card address space and the second display card address space has a mapping relationship with a same texture storage space.

5. The method according to claim 4, wherein the method further comprises:
buffering, by any one of the target work groups in the display card shader after obtaining decoded data by decoding a received compressed texture block, the decoded data in the texture storage space, the texture storage space being determined according to the mapping relationship between the second display card address space and the texture storage space; and
the performing, by the rendering pipeline, image rendering according to the texture data to obtain the image comprises:
after decoded data corresponding to the compressed texture blocks are all stored in the texture storage space, performing, by the rendering pipeline, image rendering according to the texture data in the texture storage space to obtain the image, the texture storage space being determined according to the mapping relationship between the first display card address space and the texture storage space.

6. The method according to claim 4, further comprising:
allocating, by the rendering pipeline, the texture storage space to the image from a local space of the computer device;
mapping, by the rendering pipeline, the first display card address space to the texture storage space, and sending, by the rendering pipeline, a space identifier of the texture storage space to the decoding pipeline; and
mapping, by the decoding pipeline, the second display card address space to the texture storage space according to the space identifier.

7. The method according to claim 3, wherein the obtaining a compressed texture resource of an image comprises:
loading, by the rendering pipeline, the compressed texture resource of the image from a local space of the computer device; and
the method further comprises:
sending, by the rendering pipeline, the compressed texture resource to the decoding pipeline; and
sending, by the decoding pipeline after successfully receiving the compressed texture resource, a decoding notification to the display card shader, to notify the display card shader to allocate, in the display card shader, the plurality of target work groups for respectively decoding the plurality of compressed texture blocks.

8. The method according to claim 7, wherein the computer device is provided with a display card decoding mode, the display card decoding mode being a mode of performing decoding by the display card shader; and the method further comprises:
detecting, by the rendering pipeline, a mode status of the display card decoding mode, the mode status comprising an on state and an off state;
sending, by the rendering pipeline in a case that the mode status is the on state, the compressed texture resource to the decoding pipeline; and
invoking, by the rendering pipeline in a case that the mode status is the off state, a display card driver central processing unit (CPU) to decode the compressed texture blocks in the compressed texture resource to obtain the texture data of the image.

9. The method according to claim 8, wherein the image is a game image in a game; and the method further comprises:
obtaining, by the rendering pipeline, an offline decoded data set of the game, the offline decoded data set comprising image identifiers of one or more game images in the game and comprising texture data respectively associated with the image identifiers, texture data associated with any one of the image identifiers being obtained by performing offline decoding on a compressed texture resource of a game image indicated by the image identifier;
determining, by the rendering pipeline, whether an image identifier of the image is included in the offline decoded data set;
detecting, by the rendering pipeline in a case that the image identifier of the image is not included in the offline decoded data set, the mode status of the display card decoding mode; and
loading, by the rendering pipeline in a case that the image identifier of the image is included in the offline decoded data set, texture data associated with the image identifier from the offline decoded data set, and determining the loaded texture data as the texture data of the image.

10. The method according to claim 9, wherein
the allocating, in a display card shader, a plurality of target work groups for respectively decoding the plurality of compressed texture blocks is performed in a case that the image identifier of the image is not includes in the offline decoded data set; and
in a case that the image identifier of the image is included in the offline decoded data set, the texture data of the image is loaded from the offline decoded data set.

11. The method according to claim 9, wherein the method further comprises:
detecting, by the rendering pipeline, whether the display card driver CPU has a decoding capability of decoding the compressed texture resource;
obtaining the offline decoded data set of the game, by the rendering pipeline in response to detecting that the display card driver CPU has the decoding capability; and
invoking, by the rendering pipeline in response to detecting that the display card driver CPU does not have the decoding capability, a game engine CPU of the game to decode the compressed texture blocks in the compressed texture resource to obtain the texture data of the image.

12. The method according to claim 1, wherein the method further comprises:
invoking, in a case that the display card shader fails to decode all or some of the compressed texture blocks in the compressed texture resource, a display card driver central processing unit (CPU) to decode the compressed texture blocks in the compressed texture resource to obtain the texture data of the image.

13. The method according to claim 1, wherein the display card shader comprises M work groups, M being an integer greater than 1; and the allocating, in a display card shader, a plurality of target work groups for respectively decoding the plurality of compressed texture blocks comprises:
traversing the plurality of compressed texture blocks, and determining a current compressed texture block being traversed currently;
in a case that the M work groups in the display card shader include one or more unallocated remaining work groups, allocating one target work group for decoding the current compressed texture block from the remaining work groups; and
in a case that all the work groups in the M work groups have been allocated to the compressed texture blocks, allocating one target work group for decoding the current compressed texture block from the M work groups.

14. The method according to claim 1, wherein a decoding procedure performed by the display card shader is independently encapsulated in a software development kit (SDK) to be invoked to perform decoding of a compressed texture resource of any image.

15. An image processing apparatus, the apparatus being deployed on a computer device, and comprising:
an obtaining unit, configured to obtain a compressed texture resource of an image, the compressed texture resource being obtained by encoding the image by using a texture compression format, the compressed texture resource comprising a plurality of compressed texture blocks; and
a processing unit, configured to: allocate, in a display card shader, a plurality of target work groups for respectively decoding the plurality of compressed texture blocks, and distribute the compressed texture blocks to the respective target work groups,
the processing unit being further configured to: invoke the target work groups in the display card shader in parallel, to respective decode the received compressed texture blocks according to the texture compression format to obtain texture data of the image, the texture data comprising decoded data respectively corresponding to the compressed texture blocks.

16. A computer device, comprising an input interface and an output interface, and further comprising: a display card and a computer storage medium, the display card comprising at least a display card shader,
the computer storage medium storing one or more instructions, the one or more instructions being suitable to be loaded by the display card to perform the image processing method according to any one of claims 1 to 14.

17. A computer storage medium, the computer storage medium storing one or more instructions, the one or more instructions being suitable to be loaded and executed by a display card to perform the image processing method according to any one of claims 1 to 14.

18. A computer program product, the computer program product, when being executed, performing the image processing method according to any one of claims 1 to 14.
